# EUROPÄISCHE PATENTANMELDUNG

(11) **EP 2 594 784 A2**
(43) Veröffentlichungstag der Anmeldung: **22.05.2013**
(21) Anmeldenummer: 12192863.4
(22) Anmeldetag: 15.11.2012
(51) Int. Cl.: F03D 3/00, F03D 3/06

(54) **Vertikalwindturbine und Rotorblatt hierfür**

(30) Priorität: 18.11.2011 DE 102011118844
(71) Anmelder: Kreye, Sandrah, 49504 Lotte-Osterberg (DE)
(72) Erfinder: Kreye, Sandrah, 49504 Lotte-Osterberg (DE)
(74) Vertreter: Meyer, Ralph

(57) **Zusammenfassung**

Die Erfindung betrifft eine Vertikalwindturbine (1) und ein Rotorblatt (2) hierfür, wobei ein Profilquerschnitt eine in Bewegungsrichtung (7) des Rotorblatts (2) vorlaufend angeordnete Profilnase (8) und zwei beiderseits der Profilnase (8) gegenüber liegende Profilseiten aufweist.

Um mit möglichst geringem Materialaufwand das Leistungskennfeld einer Vertikalwindturbine zu optimieren, ist erfindungsgemäß vorgesehen, dass die eine der Profilseiten als Auftriebsprofilseite (9) mit einem Tragflächenprofil nach Art eines Auftriebsläufers und die andere der Profilseiten als Widerstandsprofilseite (10) mit einer entgegen der Bewegungsrichtung (7) des Rotorblatts (2) offenen Schaufel (11) nach Art eines Widerstandsläufers ausgebildet ist.

## Beschreibung

Die Erfindung betrifft ein Rotorblatt für eine Vertikalwindturbine gemäß Anspruch 1. Die Erfindung betrifft außerdem eine Vertikalwindturbine mit einem solchen Rotorblatt gemäß Anspruch 9.

Vertikalwindturbinen weisen einen Rotor auf, dessen Rotationsachse senkrecht zum Boden steht. Die Drehbewegung der Vertikalwindturbine ist dabei unabhängig von der Windrichtung, wodurch die Vertikalwindturbine im Vergleich zu Bauarten einer Windturbine mit horizontaler Rotationsachse unempfindlich gegen wechselnde Windrichtungen und wechselnde Windstärken ist. Die Bauart der Vertikalwindturbine wird insbesondere im unteren und mittleren Leistungsbereich von Windkraftanlagen gewählt, da sie einen robusten Aufbau aufweist und angeschlossene Komponenten wie Getriebe oder Generatoren leicht zugänglich in Bodennähe angeordnet werden können.

Zur Generierung der für die nutzbare Drehbewegung um die Rotationsachse erforderlichen Kräfte weist eine Vertikalwindturbine Antriebselemente auf, welche die Funktionsweise der Vertikalwindturbine als Widerstandsläufer oder als Auftriebsläufer maßgeblich bestimmen.

Bei einer als Widerstandsläufer konzipierten Windturbine wird der Strömungswiderstand der Antriebselemente genutzt. Durch den Staudruck, der aufgrund des Abbremsens der Luftströmung auf der dem Wind zugewandten Luvseite des Antriebselements entsteht, wirkt auf das Antriebselement eine Kraft in der Lee-Richtung, welche durch entsprechende Anordnung des Antriebselements als Drehbewegung um die Rotationsachse umgesetzt wird. Ein bekannter Widerstandsläufer ist der Savonius-Rotor, bei dem als Antriebselemente zwei gegeneinander versetzt angeordnete Schaufeln vorgesehen sind.

Widerstandsläufer weisen ein hohes Drehmoment aus dem Stand auf und sind schon bei geringen Windgeschwindigkeiten einsetzbar. Allerdings haben Widerstandläufer regelmäßig ein großes Gewicht und weisen zudem vergleichsweise kleine Leistungsbeiwerte auf.

Demgegenüber nutzen Auftriebsläufer den dynamischen Auftriebseffekt, der bei der Umströmung profilierter Rotorblätter entsteht. Das Rotorblatt eines Auftriebsläufers weist einen Profilquerschnitt eines Tragflächenprofils (NACA) auf. Dabei ist eine in Bewegungsrichtung des Rotorblatts vorlaufend angeordneten Profilnase und zwei beiderseits der Profilnase gegenüber liegende Profilseiten vorgesehen, an denen die Luftströmung Auftriebskräfte erzeugt. Im Betrieb einer als Auftriebsläufer konzipierten Vertikalwindturbine überlagert sich der Wind mit der durch die Drehbewegung entstehenden Luftströmung, so dass immer Vortriebskräfte entstehen. Ein bekannter Auftriebsläufer unter den Vertikalwindturbinen ist der Darrieus-Rotor, bei dem die Rotorblätter am oberen Ende und am unteren Ende einer vertikalen Welle befestigt sind und bogenförmig nach außen ragen.

Bei sehr geringen Rotationsgeschwindigkeiten und insbesondere im Stillstand einer als Auftriebsläufer konzipierten Vertikalwindturbine ist allerdings ohne die Vortriebskraft aufgrund des Fahrtwinds regelmäßig eine Anfahrhilfe erforderlich, sofern ein spätes Anlaufen nicht gewünscht ist.

Des Weiteren sind Hybridformen bekannt, welche die Vorteile von Widerstands- und Auftriebsläufer bei verschiedenen Windgeschwindigkeiten zu kombinieren versuchen. Im unteren Geschwindigkeitsbereich wirkt das hohe Drehmoment des Widerstandsläufers, so dass keine Starterhilfe erforderlich ist. Im oberen Geschwindigkeitsbereich soll das hohe Drehmoment des Auftriebsläufers genutzt werden. Hybridformen sind zwar flexibler einsetzbar, erreichen aber nicht so hohe Leistungen wie reine Auftriebsläufer.

Eine Kombination aus Savonius-Rotor und Darrieus-Rotor offenbart DE 20 2009 007 926 U1, wobei die Kraftübertragung der beiden Rotoren über eine Hohlwelle, in der eine weitere Welle läuft erfolgt, wodurch einem Abbremsen des schnell laufenden Darrieus-Rotors durch den Widerstandsläufer entgegengewirkt werden soll, da der Widerstandsläufer durch die Bauart bedingt weniger schnell drehen kann. Die bekannte Anlage umfasst dabei einen Freilauf, auf dem der Darrieus-Rotor frei beschleunigen soll. Die bekannte Anlage erfordert einen hohen baulichen Aufwand und weist mit zwei Rotoren ein unverhältnismäßig hohes Gewicht auf.

Aus DE 41 20 908 C2 ist ein Strömungsrezeptor für Vertikalwindturbinen bekannt mit einem im Schnitt U-förmig gekrümmt ausgebildeten Vorflügel und einem blattförmig ausgebildeten Hauptflügel, die so zueinander angeordnet sind, dass jeweils die konvexe Seite des Vorflügels in Bewegungsrichtung eines Rotors nach vorn und die konkave Seite des Vorflügels zum Hauptflügel zeigt. Der Vorflügel ist dabei in einem bestimmten Abstand zum Hauptflügel angeordnet, welcher in einer Kreisbahn um die Rotorachse gekrümmt ist. Die Rezeptorteile sollen dabei in ihrer Wirkung einer Tragfläche ähneln, so dass der Wirkungsgrad des mit derartigen Strömungsrezeptoren ausgestatteten Rotors erhöht sein soll.

DE 10 2009 013 666 A1 offenbart ein Windrad mit vertikaler Achse, dessen Rotorblätter so ausgebildet sind, dass jedes Rotorblatt bei einer Umdrehung über 2 x 120° durch die Auftriebskraft aus der Windgeschwindigkeit getrieben wird und zusätzlich über ca. 150° durch die Staudruckdifferenz des Windes getrieben werden soll. Dafür sind bei der bekannten Anordnung den Auftrieb und den Widerstand nutzende Antriebselemente vorgesehen. Die Antriebselemente sind hierfür zweiteilig mit einem tragflügelförmigen Rotorblatt und einem in Bewegungsrichtung dem Rotorblatt vorgesetzten offenen Profil ausgebildet. Bei einem einteiligen Rotorblatt sind die bekannten Rotorblätter als zur Rotationsachse gekrümmte Bleche ausgebildet, welche ein nach innen oder nach außen angearbeitetes kurvenförmiges Profil aufweisen, das entgegen der Drehrichtung offen ist. Die Rotorblätter sind durch solche Streben mit einer Rotornabe verbunden, welche durch eine in Drehrichtung spitze Gestaltung Kräfte in Drehrichtung generieren. Das vorgesetzte offene Profil behindert bzw. verhindert jedoch die Anströmung der den Auftrieb nutzenden Rotorblätter, insbesondere die bei Vertikalwindturbinen wichtige Anströmung durch Fahrtwind, so dass die Leistungsfähigkeit des Rotorblatts begrenzt ist.

DE 20 2010 011 597 U1 offenbart einen schwenkbaren Wirbelrotorflügel für vertikale Windkraftanlagen, wobei der Rotorflügel nach dem Konstruktionsprinzip der goldenen Spirale / dem goldenen Schnitt konstruiert ist. Diese Konstruktionsweise will bei niedrigen Windgeschwindigkeiten mithilfe eines federbelasteten Schwenkmechanismus den Staudruck des Windes zum Anlaufen des Rotors nutzen. Bei steigender Drehzahl wird der Rotorflügel in eine andere Position geschwenkt, in welcher der Rotorflügel als Auftriebsläufer die Energie aus dem Luftstrom in Rotationsenergie umwandeln soll.

Die bekannten Vertikalwindturbinen und deren Rotorblätter haben bei Ausbildung als Widerstandsläufer Vorteile bei geringen Windgeschwindigkeiten auf Kosten hohen Gewichts und geringer Leistungsbeiwerte und bei Ausbildung als Auftriebsläufer Vorteile bei hohen Windgeschwindigkeiten bei Schwächen im unteren Leistungsbereich. Die bekannten Hybridformen stellen regelmäßig keine zufrieden stellenden Kompromisse über das gesamte Leistungskennfeld bereit oder haben eine unverhältnismäßig aufwendige und damit teure, sowie außerdem meistens schwere Bauweise.

Der vorliegenden Erfindung liegt daher das Problem zugrunde, mit möglichst geringem Materialaufwand das Leistungskennfeld einer Vertikalwindturbine zu optimieren.

Dieses Problem wird erfindungsgemäß durch ein Rotorblatt für Vertikalwindturbinen mit den Merkmalen des Anspruchs 1 gelöst. Das Problem wird ferner durch eine Vertikalwindturbine mit den Merkmalen des Anspruchs 9 gelöst.

Erfindungsgemäß ist ein Rotorblatt vorgesehen, dessen Profilquerschnitt eine in Bewegungsrichtung des Rotorblatts vorlaufende Profilnase und beiderseits der Profilnase gegenüberliegende Profilseiten aufweist, wie es bspw. bei reinen Auftriebsläufern bekannt ist, wobei eine der Profilseiten als Widerstandsprofilseite mit einer entgegen der Bewegungsrichtung des Rotorblatts offene Schaufel nach Art eines Widerstandsläufers ausgebildet ist. Eine Auftriebsprofilseite bildet die der Widerstandprofilseite gegenüberliegende und über die Profilnase im Profilquerschnitt angebundene Profilseite und ist mit einem Tragflächenprofil nach Art eines Auftriebsläufers ausgestaltet. Im Bereich der Auftriebsprofilseite ist daher die Oberfläche des Rotorblatts konvex gewölbt ausgebildet, so dass die Luftströmung an der Oberfläche aerodynamisch Kräfte erzeugt, welche zum Antrieb des Rotors genutzt werden können. Die Wölbung der Auftriebsprofilseite ist dabei derart ausgebildet, dass möglichst große aerodynamische Wirkung erzielt wird. Die Profilnase teilt dabei die Auftriebsprofilseite und die Widerstandsprofilseite, so dass diese Profilseiten im Profilquerschnitt des Rotorblatts gegenüber liegen.

Das erfindungsgemäße Rotorblatt erzeugt im Stillstand oder niedrigen Drehzahlen einer Vertikalwindturbine über seine Widerstandsprofilseite ein starkes Drehmoment, wenn die Schaufel der Widerstandsprofilseite den anströmenden Wind einfängt. Das Leistungskennfeld der erfindungsgemäßen Vertikalwindturbine weist daher im Bereich niedriger Drehzahlen ansprechende Leistungswerte auf. Mit höheren Windgeschwindigkeiten beschleunigt die Vertikalwindturbine aufgrund der Wirkung der Auftriebsprofilseite und verhält sich mit dem Anstieg der Drehzahlen zunehmend wie ein Auftriebsläufer.

Aufgrund der Widerstandsprofilseite kann auf Windfahnen oder Rotorblattverstellungen, wie sie bei reinen Auftriebsläufern oft vorgesehen sind, verzichtet werden.

Die erfindungsgemäße Vertikalwindturbine weist durch die Kombination von Widerstandsläufer und Auftriebsläufer an einem Rotorblatt und bei geringem Materialeinsatz einerseits eine niedrige Anlaufgeschwindigkeit auf und kann andererseits auch die Vorteile von schnell laufenden Tragflächenprofilen nutzen.

Das erfindungsgemäße Rotorblatt kann nämlich mit geringem Materialeinsatz die Vorteile von Auftriebsläufern mit denen von Widerstandsläufern kombinieren und vermeidet weitgehend deren jeweilige Nachteile. Insbesondere ist einem Abbremsen des Rotors bei zunehmenden Drehzahlen, wie es für Widerstandsläufer typisch ist, durch die Anordnung einer der Schaufel der Widerstandprofilseite voraus laufenden Profilnase entgegen gewirkt. Der Widerstandsbeiwert des erfindungsgemäßen Profilquerschnitts wird nämlich durch die Profilnase effektiv gesenkt, wodurch auf das Rotorblatt nur geringe Windwiderstandskräfte wirken können. Die Auftriebsprofilseite wird unabhängig von der Widerstandsprofilseite angeströmt, so dass auf das Rotorblatt dynamische Auftriebskräfte wirken, da die Widerstandsprofilseite auf der anderen Seite der Profilnase als die Auftriebsprofilseite liegt. Die Widerstandsprofilseite kann daher in keiner Rotorstellung die freie Anströmung der Auftriebsprofilseite durch den Wind bzw. den mit zunehmender Drehzahl einflussreicheren Fahrtwind behindern, so dass die Vertikalwindturbine beschleunigen kann.

Die Profilnase teilt im Betrieb der Vertikalwindturbine die anströmende Luftströmung, so dass die Auftriebsprofilseite optimal angeströmt wird und die Wirkung eines Auftriebsläufers verbessert zum Tragen bringen kann. Die Profilnase fördert zudem die Steifigkeit des Rotorblatts, insbesondere die Torsionssteifigkeit.

Eine Reduzierung des Gewichts des Rotorblatts ist durch eine Ausbildung des Profilquerschnitts als geschlossenes Hohlkammerprofil gegeben. Die Widerstandsprofilseite und die Auftriebsprofilseite sind dabei einerseits an der Profilnase und andererseits an einer Profilhinterkante zusammengeführt. Darunter ist eine funktionale Zusammenführung zu verstehen, welche nicht notwendig mit einer fertigungstechnischen Zusammenfügung von Bauteilen zusammenfallen muss. Das geschlossene Hohlkammerprofil kann jedoch auf einfache Weise durch Zusammenfügen einfach zu fertigender Blattschalen im Bereich der Profilnase und der Profilhinterkante hergestellt werden. In einer weiteren Ausführungsform sind Blattschalen zusätzlich oder alternativ im Bereich der Schaufel der Widerstandsprofilseite gefügt.

Das Hohlkammerprofil weist eine hohe Steifigkeit auf und ermöglicht größere Dimensionen des Rotorblatts sowohl hinsichtlich Blattlänge als auch Profiltiefe, als es bei einfachen Blechprofilen oder auch Vollquerschnitten möglich wäre, da einfache Blechprofile nicht die nötige Steifigkeit bieten können und Vollquerschnitte bei größeren Dimensionen zu einem unerwünschten Anstieg des Gewichts führen.

Die Schaufel der Widerstandsprofilseite begrenzt in einer vorteilhaften Ausführungsform der Erfindung einen runden Schaufelkanal, welcher sich über die Länge des Rotorblatts erstreckt. Der Schaufelkanal ist dabei ausgebildet, beispielsweise kreisrund oder mit homogen veränderten Rundungsradien, so dass keine Ecken gebildet sind, welche strömungsmechanisch ungünstig sind und zudem die Bildung von Ablagerung von Schmutzpartikeln begünstigen, welche mit dem Wind in den Schaufelkanal gelangen können. Auch Wasser oder Schnee können leichter aus dem Schaufelkanal abgeführt werden.

Vorteilhaft ist der Profilquerschnitt in einem Abschnitt zwischen der Profilnase und einer außen liegenden Schaufelkante der Schaufel als Auftriebsprofil ausgebildet, wodurch dieser Abschnitt der Widerstandprofilseite, der auf die Wirksamkeit des Profils als Widerstandsläufer wenig Einfluss hat, zur Generierung zusätzlicher Auftriebskräfte mit der anströmenden Luft genutzt wird. Diese zusätzlichen Auftriebskräfte ergänzen die Auftriebskräfte der Auftriebsprofilseite.

In einer vorteilhaften Ausführungsform liegt eine an die Schaufel angeschlossene Grundwand der Widerstandsprofilseite auf der gleichen Seite einer durch die Profilnase und die Profilhinterkante bestimmten Profilsehne wie die Auftriebsprofilseite. Dadurch kann bei einer gegebenen Profiltiefe einerseits auf der Widerstandsprofilseite eine größtmögliche Widerstandfläche mit einer entsprechenden Breite der Schaufel bzw. des Schaufelkanals ausgebildet werden und andererseits auf der Auftriebsprofilseite zusätzliche Freiheitsgrade zur Gestaltung des Tragflächenprofils gegeben werden, um ein gewünschtes strömungsmechanisches Verhalten des Rotorblatts mit einer entsprechenden Profilierung der Auftriebsprofilseite umzusetzen.

In bevorzugter Ausgestaltung der Erfindung liegt die Auftriebsprofilseite der Rotationsachse zugewandt, wodurch die außen liegende Widerstandsprofilseite mit ihrer entsprechend radial nach außen greifenden Schaufel ein höheres Drehmoment um die Rotationsachse erzeugt.

Ist an den freien Enden des Rotorblatts jeweils eine Finne angeordnet, so wird der Leistungsbeiwert der Vertikalwindturbine signifikant erhöht, da an den Abrisskanten der als Auftriebsläufer wirkenden Komponenten des Rotorblatts weniger Strömungswiderstände und Verwirbelungen entstehen. Dadurch wird auch die Geräuschemission der Vertikalwindturbine verringert. Unter einer Finne wird dabei ein Element verstanden, welches mit dem Rotorblatt und insbesondere der dynamisch wirkenden Auftriebsprofilseite fluchtet und ähnlich dem Leitwerk bei Flugzeugen oder Flossen bei Fischen wirkt. Die Finne ist zu diesem Zweck zu ihrem Ende zunehmend flacher ähnlich einer Zunge ausgebildet. Die Finne verschließt dabei die Hohlkammer des Profilquerschnitts, wodurch der Wirkungsgrad des Rotorblatts verbessert ist.

Vorteilhaft verläuft die Finne in Richtung der Widerstandsprofilseite gebogen oder winkelig angestellt, wodurch eine Rutsche gebildet ist, über die Schmutz, Regenwasser oder auch eine Schneesäule aus dem Schaufelkanal abgeführt werden. Aufgrund der vertikalen Anordnung des Rotorblatts gleiten selbst Eisschichten, welche sich während des Stillstands der Vertikalwindturbine im Schaufelkanal bei entsprechenden Witterungsbedingungen bilden können aufgrund ihres Eigengewichts durch die Rutsche der Finne ab. Der Radius der Biegung bzw. der Anstellwinkel der Finne wird unter Berücksichtigung der gewünschten aerodynamischen Eigenschaften der Finne und des mit der Finne ausgestatteten Rotorblatts einerseits und der Rutsche der Finne andererseits bestimmt.

Setzt die Finne einen der Auftriebsprofilseite zugeordneten Abschnitt des Profilquerschnitts fort und überdeckt die Widerstandsprofilseite unter Ausbildung einer Öffnung zum Schaufelkanal, so ist ein axialer Abschluss des Schaufelkanals gegeben, welcher den Leistungsbeiwert des Rotorblatts bzw. der Vertikalwindturbine erhöht, unter gleichzeitiger Bereitstellung einer Rutsche zur Abführung von Wasser- oder Eisfracht aus dem Schaufelkanal gegeben.

Die Finne ist in einer vorteilhaften Ausgestaltung ein in die Hohlkammer einschiebbares Bauteil. Sie besteht in einer vorteilhaften Ausführung aus einem glas- oder kohlefaserverstärkten Kunststoff. In einer weiteren vorteilhaften Ausführungsform ist die Finne einstückig mit dem Rotorblatt bzw. einstückig mit den Komponenten des Rotorblatts ausgebildet, aus denen das Rotorblatt mit seinem geschlossenen Hohlkammerprofil zusammengesetzt ist.

Bei einer erfindungsgemäßen Vertikalwindturbine werden die Rotorblätter bevorzugt parallel zur Rotationsachse, das heißt senkrecht zum Boden, angeordnet. Dadurch wird der Materialeinsatz bei höherem Leistungsbeiwert für die wirksame Fläche im Vergleich zu anderen Anordnungen verringert. Zudem ist sichergestellt, dass sich alle Bereiche des erfindungsgemäßen Rotorblatts gleich schnell bewegen, was sowohl für die Wirksamkeit der Widerstandsprofilseite als auch der Auftriebsprofilseite vorteilhaft ist. Die Rotorblätter können mit einheitlichem Anstellwinkel im Hinblick auf die Auftriebsprofilsseite an dem Rotor der Vertikalwindturbine befestigt werden.

Die Rotorblätter der erfindungsgemäßen Vertikalwindturbine sind an radialen Streben gehalten. Unter einer radialen Strebe ist dabei ein längliches Bauteil zu verstehen, welches in seiner Einbaulage an seinem Ende, welches das Rotorblatt trägt, in einem Abstand zur Rotationsachse des Rotors liegt. Die Ausrichtung der Strebe hat demnach wenigstens eine radiale Komponente oder ist ausschließlich radial.

In einer vorteilhaften Weiterbildung der Erfindung sind die radialen Streben mit einem Profilquerschnitt ähnlich dem erfindungsgemäßen Rotorblatt ausgebildet. Die Streben weisen demnach ähnlich den Rotorblättern einen Profilquerschnitt mit einer in Bewegungsrichtung des Rotors vorlaufend angeordneten Profilnase und zwei beiderseits der Profilnase gegenüber liegenden Profilseiten auf. Dabei ist eine der Profilseiten als Auftriebsprofilseite mit einem Tragflächenprofil nach Art eines Auftriebsläufers und die andere der Profilseiten als Widerstandsprofilseite mit einer entgegen der Bewegungsrichtung des Rotors offenen Schaufel nach Art eines Widerstandsläufers ausgebildet ist. Die erfindungsgemäß als Profil gestalteten Streben verstärken die vorteilhaften Wirkungen der Vertikalwindturbine mit der erfindungsgemäßen Kombination von Widerstandsläufer und Auftriebsläufer.

Weitere Merkmale der Erfindung ergeben sich aus den Unteransprüchen und den Ausführungsbeispielen, welche nachstehend anhand der Zeichnung näher erläutert sind. Es zeigen:
- Fig. 1: eine modellhafte Ansicht eines Ausführungsbeispiels einer Vertikalwindturbine,
- Fig. 2: eine Draufsicht auf die Vertikalwindturbine gemäß Fig. 1,
- Fig. 3: einen Profilquerschnitt eines Rotorblatts,
- Fig. 4: den Profilquerschnitt gemäß Fig. 3 mit Hervorhebung der Auftriebsprofilseite,
- Fig. 5: den Profilquerschnitt gemäß Fig. 3 mit Hervorhebung der Widerstandsprofilseite,
- Fig. 6: eine perspektivische Ansicht einer Finne eines Rotorblatts,

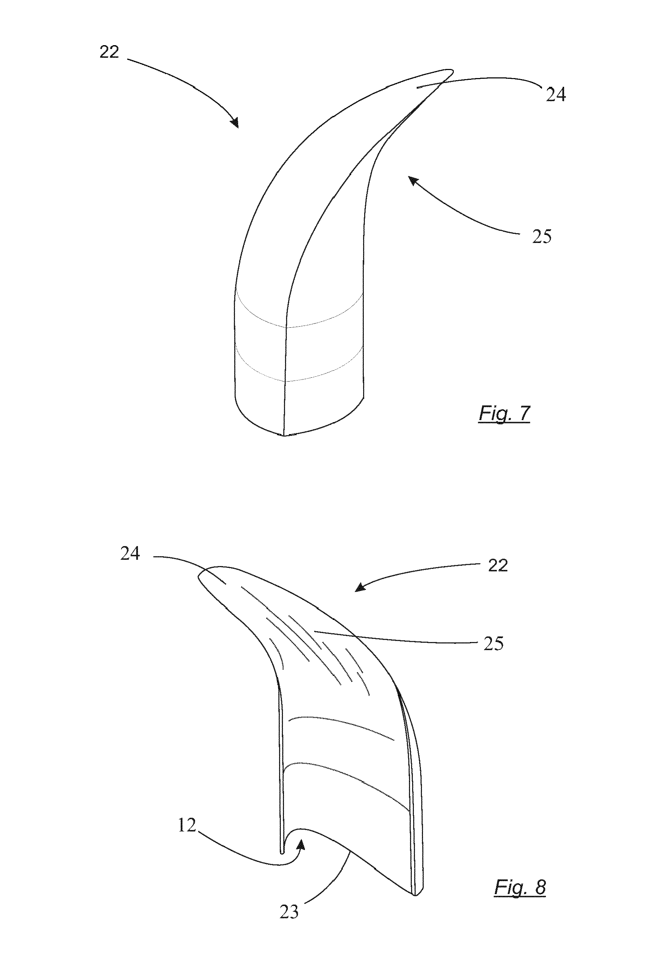

- Fig. 7: eine Frontansicht der Finne gemäß Fig. 6,
- Fig. 8: eine Hinteransicht der Finne gemäß Fig. 6,
- Fig. 9: eine perspektivische Ansicht eines weiteren Ausführungsbeispiels einer Vertikalwindturbine,
- Fig. 10: eine Vergrößerung des Ausschnitts IX in Fig. 9.

In der nachfolgenden Figurenbeschreibung sind für jeweils gleiche Bauteile die gleichen Bezugszeichen verwendet.

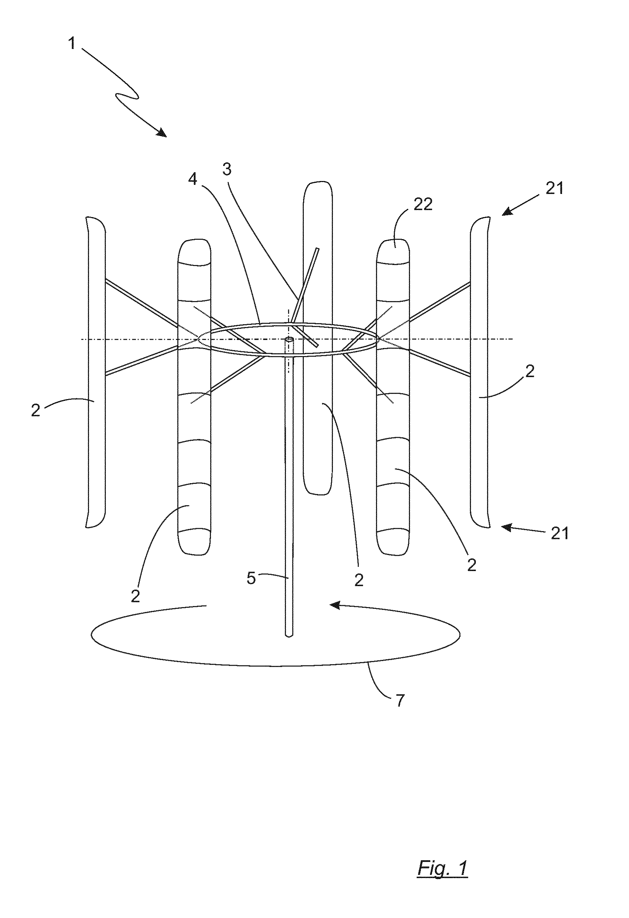

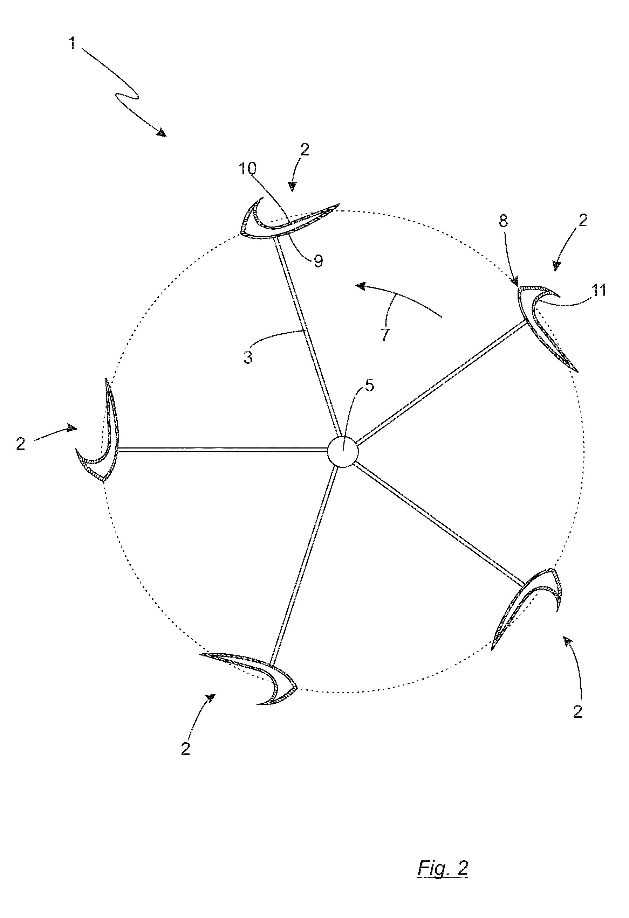

Fig. 1 und Fig. 2 zeigen eine Vertikalwindturbine 1 mit fünf Rotorblättern 2, welche über radiale Streben 3 an einem Rotor 4 befestigt sind und parallel zu einer lotrecht liegenden Rotationsachse 5 des Rotors 4 angeordnet sind. In weiteren, nicht gezeigten Ausführungsbeispielen sind andere Anzahlen von Rotorblättern 2 vorgesehen, wenigstens jedoch ein Rotorblatt 2 mit der nachstehend noch erläuterten Konfiguration.

Die Rotorblätter 2 sind symmetrisch, das heißt in gleichen Winkelabständen zueinander angeordnet. Die Rotorblätter 2 weisen einen nachstehend näher beschriebenen Profilquerschnitt 6 auf. Der Profilquerschnitt 6 bewirkt dabei, dass anströmende Luft an den Rotorblättern 2 Kräfte generiert, deren vektorielle Summe ein resultierendes Drehmoment um die Rotationsachse 5 erzeugt, so dass der Rotor 4 in einer Bewegungsrichtung 7 angetrieben wird.

Im gezeigten Ausführungsbeispiel sind alle Rotorblätter 2 mit dem gleichen Profilquerschnitt 6 gestaltet. In weiteren vorteilhaften Ausführungsbeispielen sind einige der am Umfang des Rotors 4 angeordneten Rotorblätter mit dem nachstehend beschriebenen erfindungsgemäßen Profilquerschnitt 6 ausgestaltet. Die erfindungsgemäßen Rotorblätter 2 sind dabei vorteilhaft in gleichen Abständen am Umfang des Rotors 4 angeordnet, wobei zwischen den erfindungsgemäßen Rotorblättern 2 solche Rotorblätter mit anderen Profilquerschnitten angeordnet sind.

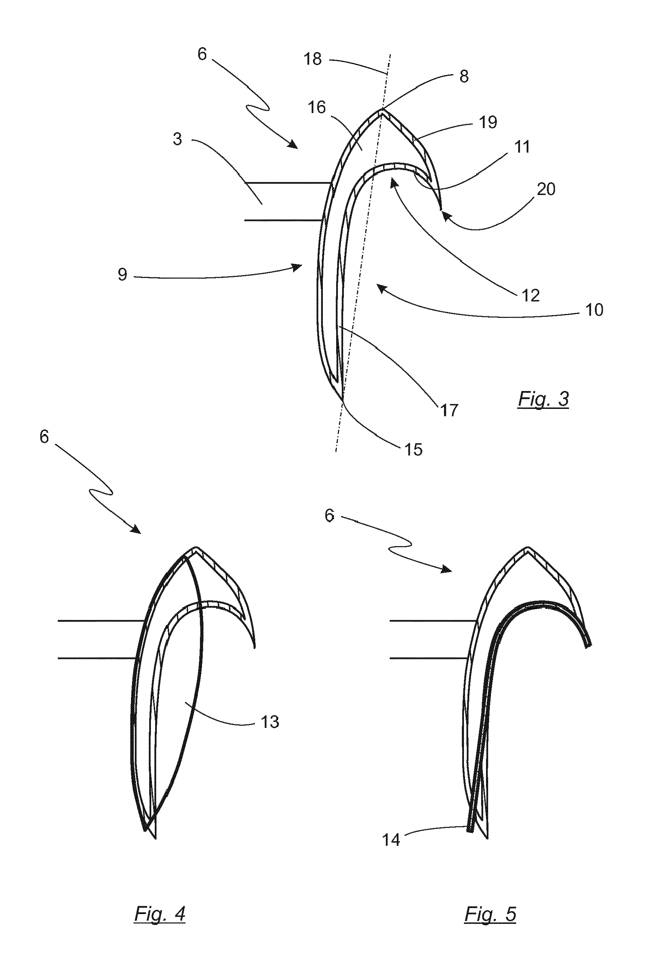

Der Profilquerschnitt 6 des Rotorblatts 2, welcher in Fig. 3 vergrößert dargestellt ist, weist eine in Bewegungsrichtung 7 vorlaufend angeordnete Profilnase 8 und zwei beiderseits der Profilnase 8 gegenüber liegende Profilseiten auf. Dabei ist eine der Profilseiten als Auftriebsprofilseite 9 mit einem Tragflächenprofil nach Art eines Auftriebsläufers und die andere der Profilseiten als Widerstandsprofilseite 10 mit einer entgegen der Bewegungsrichtung 7 des Rotorblatts 2 offenen Schaufel 11 nach Art eines Widerstandsläufers ausgebildet. Die Schaufel 11 begrenzt dabei einen runden Schaufelkanal 12, welcher sich axial über die Länge des Rotorblatts 2 erstreckt.

Das Rotorblatt 2 erzeugt im Stillstand oder niedrigen Drehzahlen der Vertikalwindturbine 1 über die Widerstandsprofilseite 10 ein starkes Drehmoment, wenn die Schaufel 11 den anströmenden Wind einfängt. Mit höheren Windgeschwindigkeiten setzt zunehmend die Wirkung der Auftriebsprofilseite 9 des Rotorblatts 2 ein. Die Vertikalwindturbine 1 verhält sich mit dem Anstieg der Drehzahlen zunehmend wie ein Auftriebsläufer und beschleunigt, so dass hohe Leistungsbeiwerte erreicht werden.

Zur Veranschaulichung der erfindungsgemäßen Anordnung einer Auftriebsprofilseite 9 und einer Widerstandsprofilseite 10 beiderseits der Profilnase 8, das heißt gegenüber liegend und durch die Profilnase 8 getrennt, ist in Fig. 4 ein beispielhafter Profilquerschnitt eines reinen Auftriebsläufers 13 (NACA-Profil) in Überdeckung mit dem erfindungsgemäßen Profilquerschnitt 6 (Fig. 3) gezeigt. Das Profil des Auftriebsläufers 13 ist dabei nicht Teil des erfindungsgemäßen Rotorblatts, sondern nur für Zwecke der Veranschaulichung der Ausbildung der Auftriebsprofilseite 9 des erfindungsgemäßen Profilquerschnitts 6 dargestellt. Die Auftriebsprofilseite 9 weist einen konvex gewölbten Verlauf auf, welcher einer der Profilseiten des Auftriebsläufers 13 entspricht. Anstelle der zweiten konvex gewölbten Profilseite des Auftriebsläufers 13 ist bei dem erfindungsgemäßen Rotorblatt eine Widerstandsprofilseite 10 vorgesehen.

Der Profilquerschnitt 6 des erfindungsgemäßen Rotorblatts 2 mit einer Widerstandsprofilseite 10 ist in Fig. 5 zugleich mit einem Profilquerschnitt eines reinen Widerstandsläufers 14 dargestellt. Der Widerstandsläufer 14 ist herkömmlich wie dargestellt aus einem Blech gefertigt, dessen freies Ende zu einer Schaufel gebogen ist. Die Darstellung gemäß Fig. 5 verdeutlicht die Ausbildung der Widerstandsprofilseite 10 im Profilquerschnitt 6 des erfindungsgemäßen Rotorblatts 2 mit einer Konturcharakteristik eines herkömmlichen Widerstandsläufers 14.

Der Profilquerschnitt 6 des erfindungsgemäßen Rotorblatts 2 ist ein geschlossenes Hohlkammerprofil, wobei die Auftriebsprofilseite 9 und die Widerstandsprofilseite 10 an der Profilnase 8 und einer Profilhinterkante 15 zusammengeführt sind. Das geschlossene Hohlkammerprofil hat durch den Einschluss einer Hohlkammer 16 durch eine durchlaufende Wand bei geringen Wandstärken ein geringes Gewicht und weist dabei dennoch eine hohe Steifigkeit, insbesondere eine hohe Torsionssteifigkeit, auf, so dass das Rotorblatt 2 den bei hohen Drehzahlen auftretenden mechanischen Belastungen trotz geringen Gewichts standhält. Zur Torsionssteifigkeit des Rotorblatts 2 trägt ferner die Profilnase 8 bei.

Zur weiteren Versteifung des Hohlkammerprofils sind in einem nicht gezeigten Ausführungsbeispiel Stege vorgesehen, welche im Wesentlichen quer zur Bewegungsrichtung 7 die gegenüberliegenden Wandabschnitte des Hohlkammerprofils verbinden und abstützen. Ein derartiger Profilquerschnitt ist im Strangpressverfahren herstellbar.

Das Rotorblatt 2 mit Hohlkammerprofil ist aus mehreren Schalenteilen zusammengesetzt, welche jeweils für sich einfach zu fertigen sind. Vorteilhaft wird das Rotorblatt aus Aluminiumblech oder anderen Metallblechen, insbesondere Leichtmetallen, gefertigt. In weiteren Ausführungsbeispielen ist das Rotorblatt ein Bauteil aus faserverstärktem Kunststoff, insbesondere glasfaserverstärktem Kunststoff (GFK) oder kohlefaserverstärktem Kunststoff (GFK), oder besteht aus mehreren faserverstärkten Kunststoffbauteilen.

Auf der Widerstandsprofilseite 10 ist eine größtmögliche Widerstandfläche mit einer entsprechenden Breite der Schaufel 11 bzw. des Schaufelkanals 12 ausgebildet, indem eine an die Schaufel 11 anschließende Grundwand 17 der Widerstandsprofilseite 12 auf der gleichen Seite einer Profilsehne 18 liegt wie die Auftriebsprofilseite 9. Die Profilsehne 18 ist dabei durch die Profilnase 8 und die Profilhinterkante 15 bestimmt. Die Lage der Grundwand 17 auf einer der Auftriebsprofilseite zugewandten Seite der Profilsehne 18 ist bei der Gestaltung des Rotorblatts 2 als Hohlkammerprofil besonders vorteilhaft, da mit dem Hohlkammerprofil bei geringem Gewicht große Profiltiefen gewählt werden können und dabei die Lage der Grundseite 17 einen möglichst breiten Schaufelkanal 12 begrenzt. Durch die Lage der Grundwand 17 innerhalb des Hohlkammerprofils sind ferner auf der Auftriebsprofilseite zusätzliche Freiheitsgrade zur Gestaltung des Tragflächenprofils gegeben, um durch entsprechende Formgebung des Tragflächenprofils auf der Auftriebsprofilseite ein bestimmtes strömungsmechanisches Verhalten für ein gewünschtes Leistungskennfeld der Vertikalwindturbine 1 umzusetzen.

Der Profilquerschnitt 6 ist in einem konvexen Oberflächenabschnitt 19 zwischen der Profilnase 8 und einer außen liegenden Schaufelkante 20 der Schaufel 11 als Auftriebsprofil ausgebildet. Der konvexe Oberflächenabschnitt 19 wirkt aerodynamisch mit der Auftriebsprofilseite 9 zusammen und trägt zur Beschleunigung des Rotorblatts 2 bei. Der aerodynamisch günstige konvexe Verlauf der Oberfläche unmittelbar neben der Schaufelkante 20 verringert ferner Verwirbelungen aufgrund der Schaufelkante 20 und erhöht den Wirkungsgrad des Rotorblatts 2.

Im gezeigten Ausführungsbeispiel gemäß Fig.1 und Fig. 2 liegt die Auftriebsprofilseite 9 der Rotationsachse 5 der Vertikalwindturbine 1 zugewandt. In weiteren Ausführungsbeispielen sind alternierende Reihenfolgen von Rotorblättern mit der Rotationsachse 5 zugewandten Auftriebsprofilseiten 9 und solchen Rotorblättern vorgesehen, bei denen die Auftriebsprofilseite bezüglich der Rotationsachse 5 außen liegt. In einem weiteren Ausführungsbeispiel sind die Auftriebsprofilseiten sämtlicher Rotorblätter auf der bezüglich der Rotationsachse 5 außen liegenden Profilseite des Profilquerschnitts 6 angeordnet.

Durch die Ausbildung des Rotorblatts 2 als Kombination von Widerstandsläufer und Auftriebsläufer können mit dem erfindungsgemäßen Rotorblatt zunächst eine erheblich niedrigere Anlaufgeschwindigkeit der Vertikalwindturbine 1 erreicht werden, als mit Auftriebsläufern möglich ist. Ferner werden auch die Vorteile von schnell laufenden Tragflächenprofilen genutzt, insbesondere bei höheren Drehzahlen, welche mit reinen Widerstandsläufern nicht erreichbar sind. Die erfindungsgemäße Kombination von Widerstandsläufer und Auftriebsläufer ist an einzelnen Rotorblättern 2 realisiert, so dass die Vorteile dieser Kombination mit geringem Materialaufwand und damit geringem Gesamtgewicht der Vertikalwindturbine 1 zugunsten eines verbesserten Leistungskennfelds der Vertikalwindturbine 1 genutzt werden.

Die Auftriebsprofilseite 9 wird unabhängig von der Widerstandsprofilseite 10 angeströmt, so dass auf das Rotorblatt dynamische Auftriebskräfte wirken, da die Widerstandsprofilseite 10 auf der anderen Seite der Profilnase 8 als die Auftriebsprofilseite 9 liegt. Die Widerstandsprofilseite 10 kann daher in keiner Rotorstellung die freie Anströmung der Auftriebsprofilseite 9 durch den Wind bzw. den mit zunehmender Drehzahl einflussreicheren Fahrtwind behindern, so dass die Vertikalwindturbine 1 beschleunigen kann.

An den freien Enden 21 jedes Profilblatts 2 ist jeweils eine Finne 22 angeordnet, welche in Richtung der Widerstandsprofilseite 10 gebogen verläuft. Die Finne 22 weist an ihrer dem Rotorblatt 2 zugewandten Grundseite 23 den Profilquerschnitt des Rotorblatts 2 auf und ist zu ihrem gegenüberliegenden, freien Ende zu einer Zunge 24 verjüngt. Die Finne 22 wirkt aerodynamisch ähnlich einem Leitwerk bei Flugzeugen und erhöht den Leistungsbeiwert der Vertikalwindturbine 1, da an den Abrisskanten des Rotorblatts 2 weniger Strömungswiderstände und Verwirbelungen entstehen. Ferner wird durch die Finnen 22 die Geräuschemission der Vertikalwindturbine 1 verringert. Die Finne 22 verschließt zudem die Hohlkammer 16 des geschlossenen Profilquerschnitts 6, wodurch der Wirkungsgrad des Rotorblatts 2 erhöht ist.

Die Oberfläche der Finne 22 ist auf der Seite, welche an die Auftriebsprofilseite 9 des Rotorblatts 2 anschließt, sphärisch ausgebildet und fördert dadurch die Auftrieb erzeugenden Eigenschaften des Rotorblatts 2.

Die Finne 22 setzt einen der Auftriebsprofilseite 9 zugeordneten Abschnitt des Profilquerschnitts 6 fort und überdeckt die Widerstandsprofilseite 10 unter Ausbildung einer Öffnung zum Schaufelkanal 12. Dabei bildet die Zunge 24 eine Rutsche 25, über die Schmutz, Regenwasser oder auch eine Schneesäule aus dem Schaufelkanal 12 abgeführt werden.

Die Finne 22 ist im gezeigten Ausführungsbeispiel ein in die Hohlkammer 16 des Rotorblatts 2 einschiebbares Bauteil. Die Finne 22 kann dabei mit einem Absatz gefertigt sein, so dass die Oberfläche der Finne 22 nach dem Einfügen in die Hohlkammer 16 mit der Oberfläche des Rotorblatts 2 fluchtet. In einem weiteren Ausführungsbeispiel ist die Finne 22 stumpf an dem freien Ende des Rotorblatts 2 befestigt. In einem vorteilhaften Ausführungsbeispiel besteht die Finne 22 aus einem glas- oder kohlefaserverstärkten Kunststoff. Sie kann abschnittsweise als Hohlkammerprofil ausgebildet sein, wodurch weiteres Gewicht und Material der Vertikalwindturbine 1 eingespart werden kann. Insbesondere bei Ausbildung der Finne 22 mit einer Hohlkammer ist die Finne 22 in einem weiteren vorteilhaften Ausführungsbeispiel einstückig mit dem Rotorblatt 2 ausgebildet.

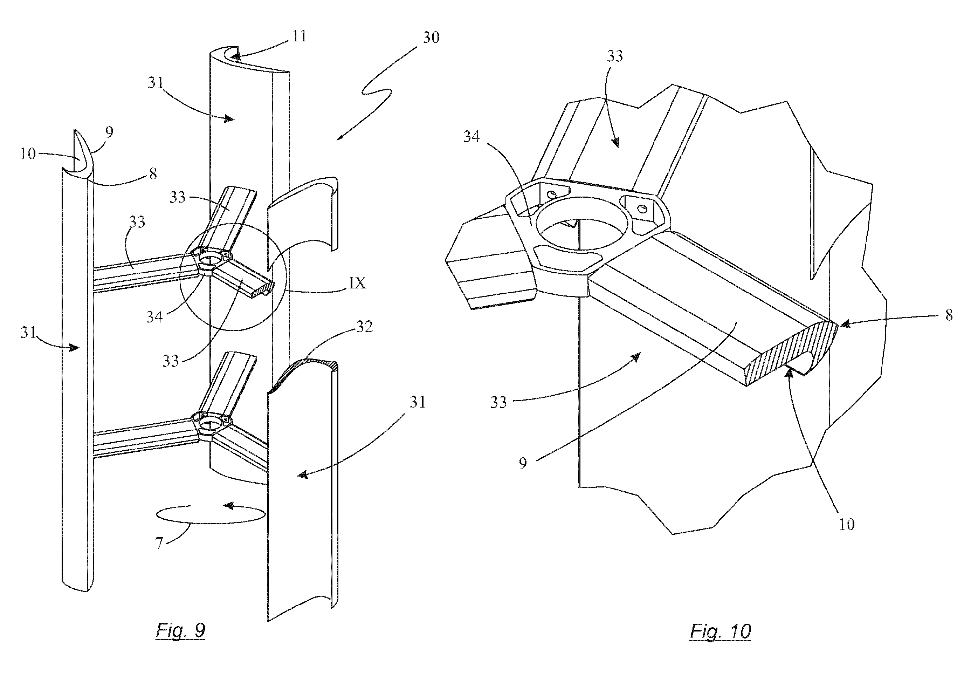

Fig. 9 zeigt ein weiteres Ausführungsbeispiel einer Vertikalwindturbine 30, welche im Unterschied zum Ausführungsbeispiel gemäß Fig. 1 und Fig. 2 drei vertikal angeordnete Rotorblätter 31 aufweist. Die Rotorblätter 31 sind jeweils mit einem Profilquerschnitt 32 ähnlich der oben anhand von Fig. 3 bis Fig. 5 beschriebenen Profilkonfiguration ausgestaltet. Der Profilquerschnitt 31 jedes Rotorblatts 31 weist dabei eine in Bewegungsrichtung 7 vorlaufend angeordnete Profilnase 8 und zwei beiderseits der Profilnase 8 gegenüber liegende Profilseiten auf. Dabei ist eine der Profilseiten als Auftriebsprofilseite 9 mit einem Tragflächenprofil nach Art eines Auftriebsläufers und die andere der Profilseiten als Widerstandsprofilseite 10 mit einer entgegen der Bewegungsrichtung 7 des Rotorblatts 2 offenen Schaufel 11 nach Art eines Widerstandsläufers ausgebildet.

Im Unterschied zum Ausführungsbeispiel gemäß Fig. 1 und Fig. 2 sind die Rotorblätter 31 als Vollprofile ausgestaltet. Die Rotorblätter 31 sind vorteilhaft Bauteile aus faserverstärktem Kunststoff, insbesondere glasfaserverstärktem Kunststoff (GFK) oder kohlefaserverstärktem Kunststoff (GFK). In einem nicht dargestellten Ausführungsbeispiel sind die Rotorblätter 31 der Vertikalwindturbine gemäß Fig. 9 als Hohlkammerprofile entsprechend der zu Fig. 1 und Fig. 2 beschriebenen Konfiguration ausgestaltet.

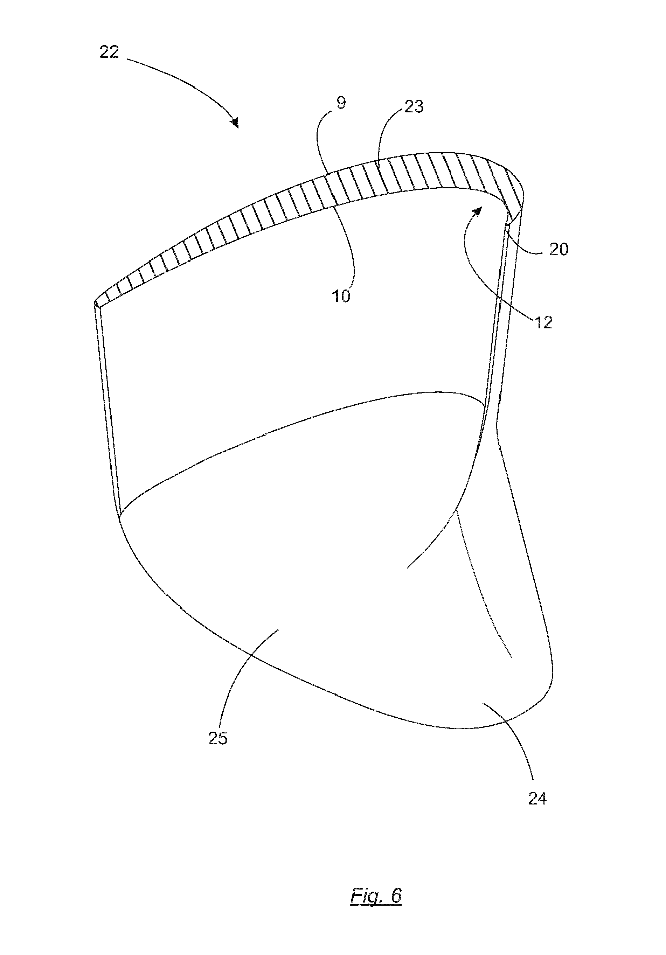

Die freien Enden der Rotorblätter 31 sind in einem nicht dargestellten Ausführungsbeispiel mit Finnen 22 (Fig. 6) entsprechend dem Ausführungsbeispiel gemäß Fig. 1 und Fig. 2 versehen. Die Finnen 22 sind an den freien Enden des Rotorblatts 31 mit Vollprofil befestigt. Bei einer Ausbildung des Rotorblatts als Hohlkammerprofil sind die Finnen 22 vorteilhaft als Einschubteil ausgebildet.

Die Rotorblätter 31 sind an radialen Streben 33 gehalten, welche die Rotorblätter 31 in dem vorgesehenen radialen Abstand zur Rotationsachse des Rotors halten. Die Streben 33 halten jeweils an ihren radial außen liegenden Enden ein Rotorblatt und sind an ihren innen liegenden Enden an einem Rotorring 34 montiert, welcher in Einbaulage des Rotors um die Rotationsachse dreht.

Die radialen Streben 33 sind mit einem Profilquerschnitt 35 ähnlich dem Profilquerschnitt 32 der Rotorblätter 31 ausgebildet. Unter einem ähnlichen Profilquerschnitt 35 ist dabei zu verstehen, dass der Profilquerschnitt 35 der radialen Streben 33 die Charakteristik der erfindungsgemäßen Profilkonfiguration mit einer Widerstandsprofilseite und einer Auftriebsprofilseite aufweist. Jede Strebe 33 umfasst eine in Bewegungsrichtung 7 vorlaufend angeordnete Profilnase 8 und zwei beiderseits der Profilnase 8 gegenüber liegende Profilseiten. Eine der Profilseiten ist dabei als Auftriebsprofilseite 9 mit einem Tragflächenprofil nach Art eines Auftriebsläufers und die andere der Profilseiten als Widerstandsprofilseite 10 ausgebildet.

## Patentansprüche

1. Rotorblatt (2, 31) für Vertikalwindturbinen (1, 30) mit einem Profilquerschnitt (6, 32), welcher eine in Bewegungsrichtung (7) des Rotorblatts (2, 31) vorlaufend angeordnete Profilnase (8) und zwei beiderseits der Profilnase (8) gegenüber liegende Profilseiten aufweist,
**dadurch gekennzeichnet, dass**
die eine der Profilseiten als Auftriebsprofilseite (9) mit einem Tragflächenprofil nach Art eines Auftriebsläufers und die andere der Profilseiten als Widerstandsprofilseite (10) mit einer entgegen der Bewegungsrichtung (7) des Rotorblatts (2, 31) offenen Schaufel (11) nach Art eines Widerstandsläufers ausgebildet ist.

2. Rotorblatt nach Anspruch 1,
**dadurch gekennzeichnet, dass**
der Profilquerschnitt (6) des Rotorblatts (2) ein geschlossenes Hohlkammerprofil ist, wobei die Auftriebsprofilseite (9) und die Widerstandsprofilseite (10) an der Profilnase (8) und einer Profilhinterkante (15) zusammengeführt sind.

3. Rotorblatt nach Anspruch 1 oder 2,
**dadurch gekennzeichnet, dass**
die Schaufel (11) einen runden Schaufelkanal (12) begrenzt.

4. Rotorblatt nach einem der vorhergehenden Ansprüche,
**dadurch gekennzeichnet, dass**
der Profilquerschnitt (6, 32) in einem Abschnitt zwischen der Profilnase (8) und einer außen liegenden Schaufelkante (20) der Schaufel (12) als Auftriebsprofil ausgebildet ist.

5. Rotorblatt nach einem der vorhergehenden Ansprüche,
**dadurch gekennzeichnet, dass**
eine an die Schaufel (12) angeschlossene Grundwand (17) der Widerstandsprofilseite (10) auf der gleichen Seite einer durch die Profilnase (8) und einer Profilhinterkante (15) bestimmten Profilsehne (18) liegt wie die Auftriebsprofilseite (9).

6. Rotorblatt nach einem der vorhergehenden Ansprüche,
**dadurch gekennzeichnet, dass**
die Auftriebsprofilseite (9) der Rotationsachse (5) zugewandt liegt.

7. Rotorblatt nach einem der vorhergehenden Ansprüche,
**dadurch gekennzeichnet, dass**
an den freien Enden (21) des Rotorblatts (2) jeweils eine Finne (22) angeordnet ist.

8. Rotorblatt nach Anspruch 7,
**dadurch gekennzeichnet, dass**
die Finne (22) in Richtung der Widerstandsprofilseite (10) gebogen oder winkelig angestellt verläuft, wobei die Finne (22) einen der Auftriebsprofilseite (9) zugeordneten Abschnitt des Profilquerschnitts (6) fortsetzt und die Widerstandsprofilseite (10) unter Ausbildung einer Öffnung zum Schaufelkanal (12) überdeckt, wobei die Finne (22) ein in die Hohlkammer (16) des Rotorblatts (2) einschiebbares Bauteil ist.

9. Vertikalwindturbine mit wenigstens einem Rotorblatt (2) nach einem der vorhergehenden Ansprüche.

10. Vertikalwindturbine nach Anspruch 9,
**dadurch gekennzeichnet, dass**
die Rotorblätter (2) im Wesentlichen parallel zur Rotationsachse (5) angeordnet sind.

11. Vertikalwindturbine nach Anspruch 9 oder 10,
**dadurch gekennzeichnet, dass**
die Rotorblätter (31) an radialen Streben (3, 33) gehalten sind, wobei die Streben (33) mit einem Profilquerschnitt (35) eines Rotorblatts (2, 31) gemäß einem der Ansprüche 1 bis 6 ausgebildet ist.
